# EUROPEAN PATENT APPLICATION

(11) **EP 0 820 166 A2**
(43) Date of publication of application: **21.01.1998**
(21) Application number: 97107662.5
(22) Date of filing: 09.05.1997
(51) Int. Cl.: H04J 14/02, H04B 10/207, H04B 10/213

(54) **Optical transmission system and optical branching apparatus**

(30) Priority: 18.07.1996 JP 189547/96
(71) Applicant: Kokusai Denshin Denwa Kabushiki Kaisha, Tokyo 163-03 (JP); KDD Submarine Cable Systems Inc., Tokyo 163-03 (JP)
(72) Inventor: Tatekura, Koichi, c/o KDD Submarine Cable Sys. Inc, Shinjuku-ku, Tokyo (JP); Goto, Koji, c/o Kokusai Denshin Denwa K. K., Shinjuku-ku, Tokyo (JP); Norimatsu, Naoki, c/o Kokusai Denshin Denwa K. K., Shinjuku-ku, Tokyo (JP); Yamamoto, Shu, c/o Kokusai Denshin Denwa K. K., Shinjuku-ku, Tokyo (JP)
(74) Representative: Schaumburg, Thoenes, Thurn Patentanwälte

(57) **Abstract**

In the optical transmission system of wavelength-division multiplexing, a plurality of wavelengths to be wavelength-division multiplexed are divided into a plurality of wavebands (for example, wavebands L, M and H, and the waveband EX for communication between trunk stations), each waveband consisting of one or more wavelengths. Each of branch stations 16-1 ∼ 16-4 is connected with a trunk cable 14 through each of optical branching apparatuses 18-1 ∼ 18-6 which is provided with one or more add/dropping elements to effect add/drop of the waveband(s) allotted to the associated one of the branch stations to be connected therewith. Optical branching apparatus for general purpose comprises an optical transmission path having add/dropping element for each of wavebands L, H and M, in addition to a through optical transmission path. A burden of having a great number of optical branching apparatuses in stock is reduced, since the optical paths to effect add/drop of wavebands allotted to branch stations 16-1∼16-4 to be connected can be used selectively or in combination thereof.

## Description

### BACKGROUND OF THE INVENTION

### Field of the Invention

This invention relates to an optical transmission system and an optical branching apparatus, and more specifically to an optical transmission system and an optical branching apparatus for which a technology of optical wavelength-division multiplex is applied.

### Related Art

The technology of optical wavelength-division multiplex is effective as means for increasing a transmission capacity. The number of logical transmission channels is increased corresponding to the number of multiplexed wavelengths. For example, a system for allotting a particular wavelength to each branch station is now being considered.

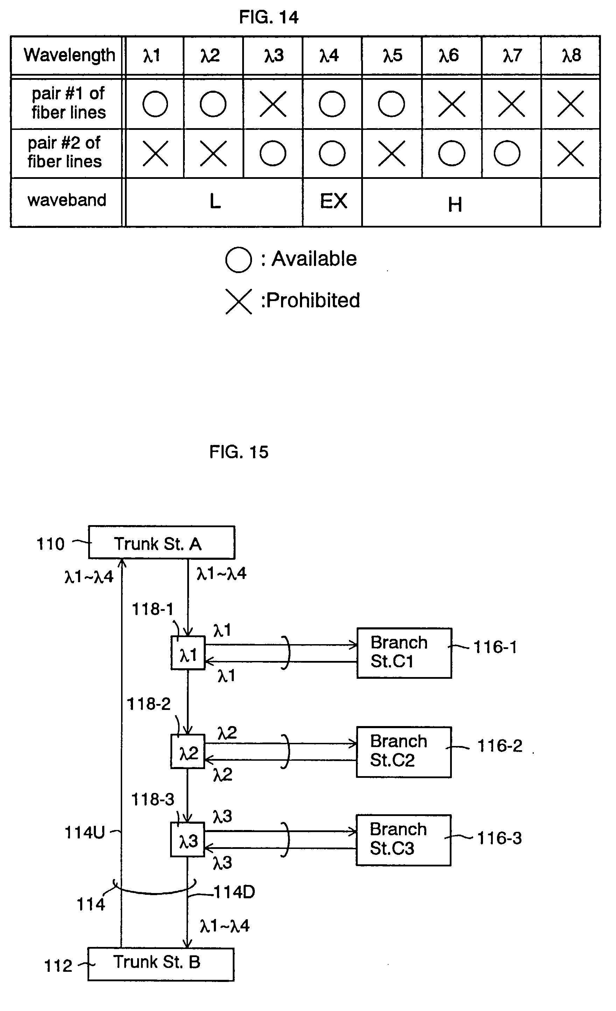

FIG. 15 is a schematic structural block diagram of a conventional system wherein an optical wavelength allotted to each branch station is subjected to add/drop on a trunk line. Generally in optical fiber transmission, two optical fiber lines for up and down are used, and, accordingly, a pair of optical fiber lines makes a unit. A trunk cable 114 consisting of an optical fiber line 114U for up link and an optical fiber line 114D for down link is laid between a trunk station 110 and a trunk station 112. The trunk cable 114 is capable of transmission of a wavelength-division multiplexed optical signal comprising at least four optical wavelengths λ1, λ2, λ3 and λ4. Then the optical wavelengths λ1, λ2 and λ3 are allotted to branch stations 116-1, 116-2 and 116-3, respectively, and transmission of signals between each branch station 116-1, 116-2, 116-3 and the trunk station 110 or 112 is made with a particular optical wavelength allotted to each branch station. The wavelength λ4 is used for data transmission between the trunk stations 110 and 112.

Optical branching apparatuses 118-1, 118-2 and 118-3, each comprising an add/dropping element for effecting add/drop of wavelengths λ1, λ2 and λ3 respectively corresponding to each branch station 116-1, 116-2 and 116-3, are connected to the trunk cable 114 (specifically to a down optical fiber line 114D in FIG. 15). The optical branching apparatus 118-1 drops the wavelength λ1 out of the wavelength-multiplexed optical signal comprising the wavelengths λ1 ∼ λ4 which has been input from the upstream of the down optical fiber line 114D, and supplies the dropped wavelength λ1 to the branch station 116-1. And the apparatus 118-1 wavelength-multiplexed the optical signal of the wavelength λ1 from the branch station 116-1 with the wavelength-multiplexed optical signal comprising the wavelengths λ2 and λ4 which remains after dropping of the wavelength λ1, and supplies the resulted wavelength-multiplexed optical signal to the next optical branching device 118-2. The subsequent optical branching apparatus 118-2 and 118-3 perform the same function as the optical branching apparatus 118-1, except their respectively allotted wavelengths. Namely, the optical branching apparatus 118-2 and 118-3 supply the dropped wavelengths λ2 and λ3 to the branch stations 116-2 and 116-3 respectively, and wavelength-multiplexed the optical signals of the wavelengths λ2 and λ3 from the branch stations 116-2 and 116-3 with the wavelengths remained in the optical signals after dropping the wavelengths of λ2 and λ3, respectively.

The trunk station 112 receives the wavelength-multiplexed optical signal comprising the wavelengths λ1 ∼ λ4 supplied from the optical branching apparatus 118-3 through the down optical fiber line 114D and processes each wavelength as required and/or transmits the signal to the trunk station 110 via an up optical fiber line 114U.

As such, each branch station 116-1, 116-2, and 116-3 can transmit data bi-directionally with the trunk station 110 and/or 112 with the respectively allotted wavelengths of λ1, λ2 and λ3. The trunk stations 110 and 112 can transmit data with each other, using the wavelength λ4.

One or more optical branch stations 118-1 ∼ 118-3 may be connected to the up optical fiber line 114U. The branch station may also be connected to both the optical branching device connected to the up optical fiber line 114U and the optical branching device connected to the down optical fiber line 114D.

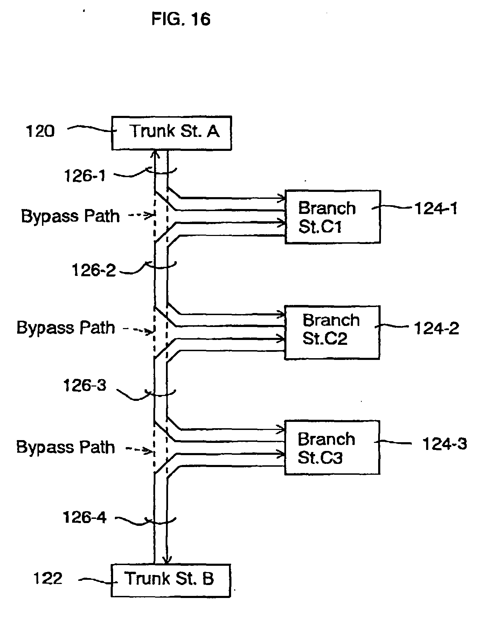

FIG. 16 is a schematic structural block diagram of a conventional system wherein the branch stations are chain connected between two trunk stations. Numerals 120 and 122 designate the trunk stations, numerals 124-1 ∼ 124-3 designate the branch stations. The trunk station 120 is connected to the branch station 124-1 by means of an optical cable 126-1, the branch station 124-1 and the branch station 124-2 are connected to each other by an optical cable 126-2, the branch station 124-2 and the branch station 124-3 are connected to each other by an optical cable 126-3, and the branch station 124-3 is connected to the trunk station 122 by an optical cable 126-4. Each of the optical cables 126-1 ∼ 126-4 contains therein a pair of optical fiber lines.

For example, as in the system of FIG. 15, at least four optical wavelengths λ1, λ2, λ3 and λ4 are used, of which the wavelengths λ1, λ2, and λ3 are respectively allotted to the branch stations 124-1, 124-2 and 124-3, thereby the signals are transmitted between the trunk station 120 or 122 and each branch station with the allotted optical wavelengths, while the wavelength λ4 is used for data transmission between the trunk stations 120 and 122.

The trunk station 120 outputs the wavelength-multiplexed optical signal of the wavelengths λ1, λ2 and λ3 directed to the branch stations 124-1, 124-2 and 124-3 and the wavelength λ4 directed to the trunk station 122 to the down optical fiber line of the optical cable 126-1. The wavelength-multiplexed optical signal comprising of the wavelengths λ1 ∼ λ4 and transmitted through the down optical fiber line of the optical cable 126-1 is input into the branch station 124-1 wherein the wavelength λ1 is dropped and subjected to signal receiving and processing. The remaining wavelengths λ2 ∼ λ4 are multiplexed with the wavelength λ1 directed to the trunk station 120 or 122, and thus multiplexed wavelengths are output to the down optical fiber line of the optical cable 126-2. Similarly, in each of the branch stations 124-2 and 124-3, the wavelength λ2 or λ3 is dropped respectively out of the optical signals from the branch stations 124-1 or and 124-2 and subjected to signal receiving and processing, and the remaining of the input optical signal from which the wavelength λ2 or λ3 has been excluded is multiplexed with the wavelength λ2 or λ3 directed to the trunk station 120 or 122, and the thus wavelength-multiplexed optical signal is output to the down optical fiber line of the optical cable 126-2.

The trunk station 122 receives the optical signal comprising the wavelengths λ1 ∼ λ4 from the branch station 124-3 and subjects them to the signal receiving and processing as required, and/or transmits the signal to the up optical fiber line of the optical cable 126-4.

The optical signal transmitted through the up optical fiber line of each of the optical cable 126-1 ∼ 126-4 is processed exactly in the same manner.

As described above, the optical signal comprising the wavelengths respectively allotted to the branch stations 124-1 ∼ 124-3 is subjected to add/drop in each of branch stations 124-1 ∼ 124-3.

With the conventional system of FIG. 16, which is, for example, a submarine cable system, portions of the optical cables 126-1 ∼ 126-4 adjacent to each of branch stations 124-1 ∼124-3 are located at shallow positions near the land, and a possibility for the optical cables to be cut by fishing boats becomes high. With the conventional system of FIG. 16, if any of the optical cables 126-1 ∼ 126-4 is cut at any portion, communication between the ends at the cut portion is no longer possible. To avoid such trouble, generally a bypass path (shown by a broken line) is provided to bypass each of branch stations 124-1 ∼ 124-3, and the bypass path can be switched over by a remote control.

With the conventional system of FIG. 15, the wavelengths of add/dropping elements incorporated in the optical branching apparatuses 118-1 ∼ 118-3 are fixed. Therefore, for the purpose of maintenance, it is necessary to have spares for all of the optical branching devices 118-1 ∼ 118-3 in stock. However, a spare of the optical branching device 118-1 cannot be used as the optical branching device 118-2. This causes an increase of the cost. Another disadvantage of this conventional system is that it cannot flexibly deal with traffic fluctuation in each of the branch stations 124-1 ∼ 124-3.

On the other hand, with the conventional system of FIG. 16, many stations are chain connected, and, therefore, the system is basically vulnerable to troubles. Even if the system was so structured to have a bypass path to bypass the troubled portion, a response to switch-over to the bypass path was slow in this conventional system, and, consequently, temporary disconnection of communication could not be avoided. Further, providing the bypass path creates a security problem. Another disadvantage of the conventional system of FIG. 16 is that the quality of signal is liable to be deteriorated, because the optical signal is transmitted through each station.

Either of the above-described conventional system has the disadvantage of not being able to flexibly deal with traffic fluctuation in each of the branch stations 118-1 ∼ 118-3; and 124-1 ∼ 124-3.

### OBJECT AND SUMMARY OF THE INVENTION

An object of the present invention is to solve these problems and to provide an optical transmission system which can flexibly deal with traffic fluctuation with easy maintenance.

Another object of the present invention is to provide an optical transmission system which is capable of allotting a plurality of wavelengths to each branch station.

A further object of the present invention is to provide an optical transmission system which can avoid giving any substantial affect of a trouble occurred in a branching passage to other portion.

A still further object of the present invention is to provide an optical branching apparatus which is capable of freely selecting wavelengths to be subjected to add/drop process.

According to the present invention, a plurality of wavelengths of wavelength-division multiplexing transmission system are divided into a plurality of wavebands, each waveband comprising one or more wavelengths, and one or more optical branching apparatus connected to each branch station are provided with add/dropping means for effecting add/drop of one or more desired wavebands. With this arrangement, each branching apparatus can access to the trunk cable with a waveband as a unit, and the wavelengths available for use can be changed or added afterwards, thereby to flexibly deal with fluctuation of traffic. Further, it is not necessary to provide an optical branching apparatus for add/dropping each wavelength, and the burden of having the optical branching apparatuses in stock is reduced, and maintenance is made easier.

Provision of one or more wavelengths which cannot be subjected to add/drop by each optical branching apparatus allows, for example, assuring of a direct communication network between trunk stations. Thereby, communication paths between trunk stations are ensured even when a trouble is occurred in a branch cable, and, thus, a system which is strong enough to withstand such troubles can be provided.

In the case where the trunk cable has a plurality of pairs of optical fiber lines, different wavebands may be subjected to add/drop on each pair of optical fiber lines, respectively, thereby, general purpose optical branching apparatuses can be utilized fully without wasting any of them.

The optical branching apparatus according to this invention comprises a plurality of add/drop optical transmission means having add/dropping means for effecting add/drop of each waveband to be subjected to add/drop respectively, when wavelengths to be wavelength-division multiplexed are divided into a plurality of wavebands; and through optical transmission means. A combination or selection of these optical transmission means allows to add/drop one or more desired wavebands, and, therefore, an optical branching apparatus for general use can be provided. Consequently, a stock of branching apparatuses ready for use when trouble occurs can be reduced, which, in turn, greatly reduces the cost required for maintenance.

For the plurality of add/drop optical transmission means, it is preferable to provide optical amplifier means for each add/drop optical transmission means, except at least one add/drop optical transmission means. Provision of the add/drop optical transmission means without having the optical amplifier means can prevent the system from having a plurality of optical amplifier in case of add/dropping a plurality of wavebands. Further, bypass means for selectively bypassing add/dropping means is provided to at least one add/drop optical transmission means having optical amplifier means, so that optical transmission means having only optical amplifier means can be formed, which is possible to be used in combination with add/drop optical transmission means having no optical amplifier means.

Add/drop optical transmission means and through optical transmission means may be provided for each unit comprising a pair of optical fiber lines consisting of up and down optical fiber lines, so that this arrangement can be easily applied for an optical transmission system having a pair of optical fiber lines as a unit.

### BRIEF DESCRIPTION OF THE DRAWINGS

FIG. 1 is an example of division of wavebands of an embodiment of this invention.

FIG. 2 is a schematic structural block diagram of the optical transmission system of this embodiment.

FIG. 3 is a schematic structural block diagram of a general purpose optical branching apparatus of this embodiment.

FIG. 4 shows a connecting example for effecting add/drop of the waveband H on a pair #1 of optical fiber lines; and add/drop of the waveband M on a pair #2 of optical fiber lines.

FIG. 5 is an equivalent circuitry arrangement of the connection of FIG. 4.

FIG. 6 shows a connecting example for effecting add/drop of the wavebands M, H on the pair #1 of optical fiber lines, and add/drop of the waveband L on the pair #2 of optical fiber lines.

FIG. 7 is an equivalent circuitry arrangement of the connection of FIG. 6.

FIG. 8 is another example of division of wavebands.

FIG. 9 is a further example of division of wavebands.

FIG. 10 is a still further example of division of wavebands.

FIG. 11 is an example of division of wavebands for an increased capacity of communication between the trunk stations.

FIG. 12 is an example of division of wavebands for allotting three adjacent wavelengths to the same pair #1 or #2 of optical fiber lines.

FIG. 13 is an example of division of wavebands comprising the waveband L consisting of three wavelengths, and the waveband H consisting of two wavelengths.

FIG. 14 is an example of division of wavebands for using the wavelength λ4 for communications between the trunk stations commonly on the pairs #1 and #2 of optical fiber lines.

FIG. 15 is a schematic structural block diagram of a conventional system.

FIG. 16 is a schematic structural block diagram of another conventional system.

### DESCRIPTION OF THE PREFERRED EMBODIMENTS

An embodiment of the invention is described below in detail with reference to the accompanying drawings.

With this embodiment, a plurality of wavelengths of a wavelength-division multiplexing transmission system are divided into a plurality of groups, namely, a plurality of wavebands, each waveband consisting of one or more adjacent wavelengths, and wavelength characteristics for each add/dropping device are set based on such waveband as a unit. The description will be made for a transmission system of eight wavelengths λ1 ∼λ8.

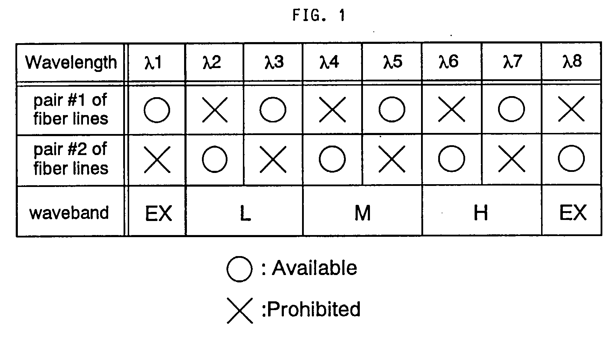

FIG. 1 shows an example of division of wavebands. In this example of division of FIG. 1, the wavelengths of λ1 and λ8 at both ends are allotted for direct communication between trunk stations, and wavebands L, M and H, each consisting of two adjacent wavelengths, are formed. In other words, the waveband L consists of λ2 and λ3, the waveband M consists of λ4 and λ5, and the waveband H consists of λ6 and λ7. The wavebands for direct communication between trunk stations are designated as EX.

Further in FIG. 1, each wavelength is alternately and exclusively allotted to a pair #1 of optical fiber lines or a pair #2 of optical fiber lines. By so doing, separation of wavelengths in a receiving station (particularly in a branch station) becomes easy, so that wavelengths can be more closely multiplexed on optical fiber lines. Further, a confusion caused by using same wavelength on different pairs of optical fiber lines can be avoided. Namely, with this embodiment, wavelengths λ1, λ3, λ5 and λ7 are allotted to the pair #1 of optical fiber lines, and wavelengths λ2, λ4, λ6 and λ8 are allotted to the pair #2 of optical fiber lines. In other words, wavelength-division multiplexed optical signal consisting of λ1, λ3, λ5 and λ7 transmits on the pair #1 of optical fiber lines, and wavelength-division multiplexed optical signal consisting of λ2, λ4, λ6 and λ8 transmits on the pair #2 of optical fiber lines,

Needless to say, even when the same wavelength is allotted to the pairs #1 and #2 of optical fiber lines, the optical signals of the same wavelength do not interfere with each other, because the pairs #1 and #2 of optical fiber lines are physically, namely, spatially, separated from each other, so that there will be no trouble in data communication or transmission.

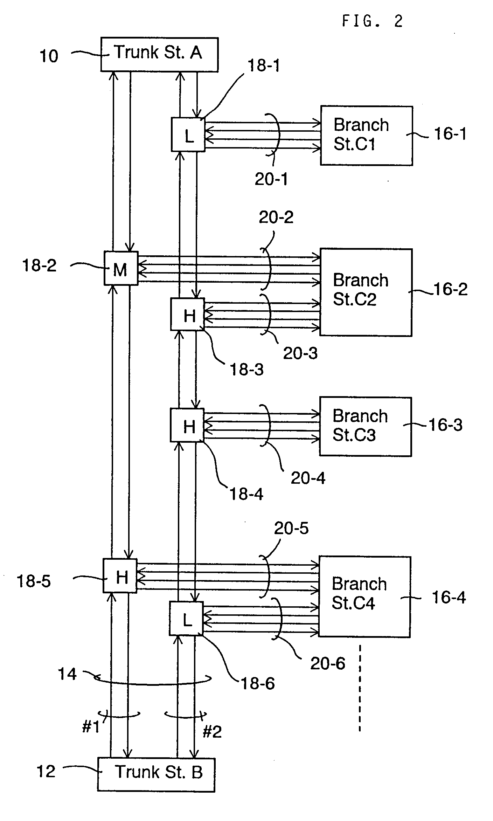

FIG. 2 is a schematic structural block diagram of an embodiment of this invention. Numeral 10 designates a trunk station A and numeral 12 designates a trunk station B, and a trunk cable 14 containing therein the pair #1 of optical fiber lines and the pair #2 of optical fiber lines is laid between the trunk stations 10 and 12. Branch stations 16-1 ∼ 16-4,... are connected to one or both of the pairs #1 and #2 of optical fiber lines by way of optical branching devices 18-1 ∼ 18-6,....

Optical branching apparatus 18-1 comprises an optical element for add/dropping of the waveband L to the pair #2 of optical fiber lines of the trunk cable 14 and is connected to the branch station 16-1 through a branch cable 20-1. The branch cable 20-1 consists of a total of four optical fiber lines, namely, two optical fiber lines for effecting add/drop on the up optical fiber line of the pair #2 of optical fiber lines of the trunk cable 14, and two optical fiber lines for effecting add/drop on the down optical fiber line of the pair #2 of optical fiber lines of the trunk cable 14. The waveband L is subjected to add/drop on the pair #2 of optical fiber lines, and, therefore, it is understood from the TABLE of FIG. 1 that the branch station 16-1 makes access to the pair #2 of optical fiber lines with the wavelength λ2.

Optical branching apparatus 18-2 comprises an optical element for effecting add/drop of the waveband M on the pair #1 of optical fiber lines of the trunk cable 14 and is connected to the branch station 16-2 through a branch cable 20-2. Optical branching apparatus 18-3 comprises an optical element for effecting add/drop of the waveband H on the pair #2 of optical fiber lines of the trunk cable 14 and is connected to the branch station 16-2 through a branch cable 20-3. Each of branch cables 20-2 and 20-3 is, similar to the branch cable 20-1, consisting of the total of four optical fiber lines. Branch cables 20-2 and 20-3 may be made in an integrally formed single cable. The waveband M is subjected to add/drop on the pair #1 of optical fiber lines, and the waveband H is subjected to add/drop on the pair #2 of optical fiber lines, and, therefore, the branch station 16-2 makes access to the pair #1 of optical fiber lines with the wavelength λ5, and access to the pair #2 of optical fiber lines with the wavelength λ6, as can be understood from the TABLE of FIG. 1.

Optical branching apparatus 18-4 comprises an optical element for effecting add/drop of the waveband H on the pair #2 of optical fiber lines of the trunk cable 14 and is connected to the branch station 16-3 through a branch cable 20-4. The branch cable 20-4 is consisting of four optical fiber lines, similarly to the branch cables 20-1 ∼ 20-3. The waveband H is subjected to add/drop on the pair #2 of optical fiber lines, and, therefore, the branch station 16-3 makes access to the pair #2 of optical fiber lines with the wavelength λ6, as can be understood from the TABLE of FIG. 1.

Optical branching apparatus 18-5 comprises an optical element for effecting add/drop of the waveband H on the pair #1 of optical fiber lines of the trunk cable 14 and is connected to the branch station 16-4 through a branch cable 20-5. Optical branching apparatus 18-6 comprises an optical element for effecting add/drop of the waveband L on the pair #2 of optical fiber lines of the trunk cable 14 and is connected to the branch station 16-4 through a branch cable 20-6. Each of branch cables 20-5 and 20-6 is consisting of the total of four optical fiber lines, similarly to the branch cables 20-1 ∼ 20-4. The branch cables 20-5 and 20-6 may be made in an integrally formed single cable. The waveband H is subjected to add/drop on the pair #1 of optical fiber lines, and the waveband L is subjected to add/drop on the pair #2 of optical fiber lines, and, therefore, the branch station 16-4 makes access to the pair #1 of optical fiber lines with the wavelength λ7, and access to the pair #2 of optical fiber lines with the wavelength λ2, as can be understood from the TABLE of FIG. 1.

With the above-described arrangement, the branch station 16-1, for example, can access to the pair #2 of optical fiber lines of the trunk cable 14 with the wavelength λ2, and can intercommunicate with the branch station 16-4 connected to the optical branching apparatus 18-6 which effects add/drop of the waveband L on the same pair #2 of optical fiber lines of the trunk cable 14. Between the trunk station 10 and the optical branching apparatus 18-1 on the pair #2 of optical fiber lines of the trunk cable 14, there is no optical branching apparatus for effecting add/drop of the waveband L, and, therefore, the trunk station 10 and the branch station 16-1 can communicate with each other with the wavelength λ2. Similarly, so long as no optical branching apparatus for effecting add/drop of the waveband L exists between the trunk station 12 and the optical branching apparatus 18-6 on the pair #2 of optical fiber lines of the trunk cable 14, the branch station 16-4 and the trunk station 12 can communicate with each other with the wavelength λ2.

When the communication from the branch station 16-4 to the trunk station 10 is desired, the optical signal of wavelength λ2 is transmitted to the branch station 16-1 by the optical branching apparatus 18-1. In this case, however, if the optical signal has its destination address of, for example, trunk station 10, the branch station 16-1 can recognize that the received signal is not addressed thereto, and the branch station 16-1 will re-transmit the as-received optical signal to the pair #2 of optical fiber lines of the trunk cable 14. Thus, intercommunication between the trunk station 10 and the branch station 16-4 is made possible.

The branch station 16-2 is connected to both pairs #1 and #2 of optical fiber lines of the trunk cable 14, thereby it can communicate with the trunk station 10 or 12 with the wavelength λ5 through the branch cable 20-2, the optical branching apparatus 18-2 and the pair #1 of optical fiber lines of the trunk cable 14. Further, the branch station 16-2 can also communicate with the branch station 16-3 with the wavelength λ6 through the branch cable 20-3, the optical branching apparatus 18-3, the pair #2 of optical fiber lines of the trunk cable 14, the optical branching apparatus 18-4 and the branch cable 20-4. By re-transmission of the wavelength λ6 as is from the branch station 16-2 and the trunk station 12 by the branch station 16-3, the branch station 16-2 can communicate with the trunk station 12 also through the pair #2 of optical fiber lines of the trunk cable 14.

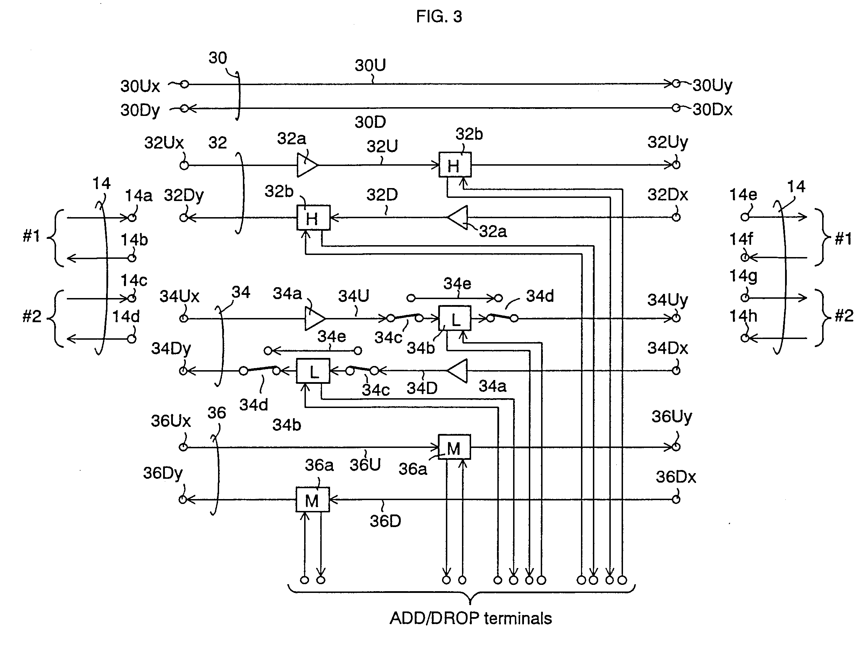

FIG. 3 is a schematic block diagram of a general purpose optical branching apparatus which can be utilized as optical branching apparatus 18-1 ∼ 18-6, respectively, by internal connection thereof. In this embodiment, since all wavelengths available for use are, as shown in FIG. 1, divided into four wavebands L, M, H, and EX, pairs 30, 32, 34 and 36 of optical fiber lines are provided respectively for each waveband.

That is, the pair 30 of optical fiber lines is for the waveband EX and consisting of up and down through optical fiber lines 30U and 30D. The pair 32 of optical fiber lines is for the waveband H and consisting of up and down optical fiber lines 32U and 32D, each including an optical amplifier 32a and add/dropping element 32b for add/dropping the waveband H. The pair 34 of optical fiber lines is for the waveband L and consisting of up and down optical fiber lines 34U and 34D, each including an optical amplifier 34a and an add/dropping element 34b for add/dropping the waveband L. Although the reason will be described hereinafter, it should be noted that both up and down optical fiber lines 34U and 34D are respectively provided with a bypass optical fiber line 34e which is adapted to bypass the add/dropping element 34b by means of externally controlled optical switches 34c, 34d. The pair 36 of optical fiber lines is for the waveband M and consisting of up and down optical fiber lines 36U and 36D, each including an add/dropping element 36a for add/dropping the waveband M.

Because an optical amplifier is not provided in the pair 36 of optical fiber lines (optical fiber lines 36U and 36D), there will be only one optical amplifier present in the case where, for example, the pair 32 of optical fiber lines (optical fiber lines 32U and 32D) and the pair 36 of optical fiber lines (optical fiber lines 36U and 36D) are connected in series. In this case, both wavebands H and M can be subjected to add/drop. When add/drop of only the waveband M is desired, this can be achieved by connecting the pair 34 of optical fiber lines with the pair 36 of optical fiber lines in series, by bypassing the add/dropping element 34b by means of the bypass optical fiber lines 34e in the pair 34 of optical fiber lines. When such add/drop of a plurality of wavebands at the same time is not considered, each of the pairs 32, 34 and 36 of optical fiber lines can be constructed by comprising optical amplifiers and add/dropping elements for effecting add/drop of respectively designated wavebands.

Next, a connecting arrangement for add/dropping designated wavebands, as in the case of each of the optical branching devices 18-1 ∼ 18-6 of FIG. 2, will be described. There are two possible connecting arrangements; one is to utilize remainder portions of optical fiber ends of the pairs 30 ∼ 36 of optical fiber lines for interconnection between the pairs 30 ∼ 36 of optical fiber lines by means of fusion or optical connectors, and the other is to connect the end of each of optical fiber lines with another optical fiber by means of fusion or optical connector. Here, in order that the relationship of connection between the pairs 30 ∼ 36 of optical fiber lines can be readily understood, the description will be made by way of connecting the end of each optical fiber line with another optical fiber. For this purpose, a symbol x is added for an input end and a symbol y is added for an output end of each of the up and down optical fiber lines 30U and 30D; 32U and 32D; 34U and 34D; and 36U and 36D, to distinguish input ends from output ends of the pairs 30 ∼ 36 of optical fiber lines.

Further, as shown in FIG. 3, in one of the trunk cables 14, the ends of up and down lines of pairs #1 and #2 of optical fiber lines are specified as 14a, 14b, 14c and 14d; and in other trunk cable 14, the ends of up and down lines of pairs #1 and #2 of optical fiber lines are specified as 14e, 14f, 14g and 14h. For connections between the trunk cable 14 and the pairs 30 ∼ 36 of optical fiber lines will be described in the manner of connecting them by using another optical fibers. However, the connections can be achieved by using remainder of any of the optical fibers.

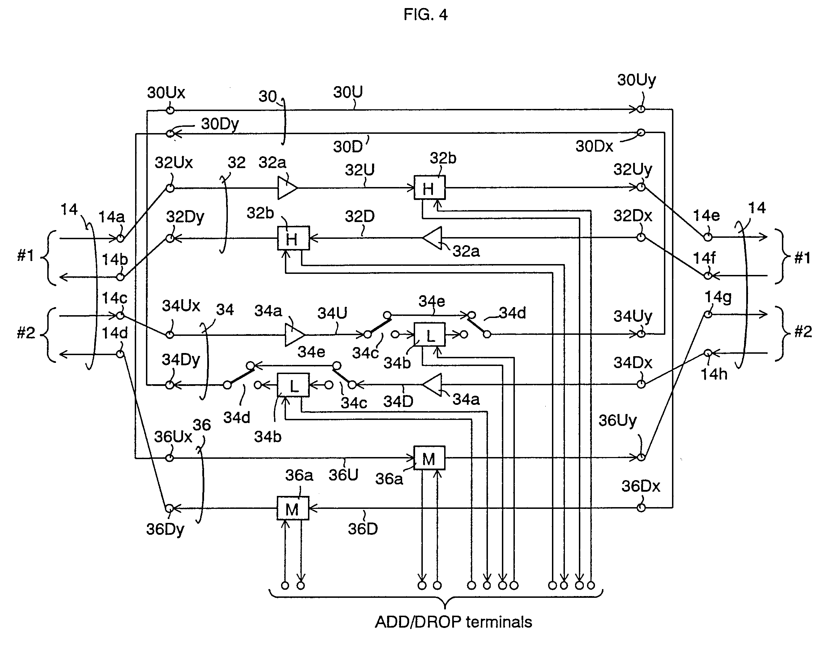

FIG. 4 illustrates a connecting arrangement for effecting add/drop of the waveband H on the pair #1 of optical fiber lines of the trunk cable 14, and effecting add/drop of the waveband M on the pair #2 of optical fiber lines of the trunk cable 14.

For add/drop of the waveband H, the necessary elements (the optical amplifier 32a and the add/dropping element 32b for add/dropping the waveband H) are provided on the pair 32 of optical fiber lines, and, therefore, add/drop of the waveband H can be achieved by connecting the pair 32 of optical fiber lines with the pair #1 of optical fiber lines. Specifically, the optical fiber end (output end) 14a of the pair #1 of optical fiber lines of the trunk cable 14 is connected with the input end 32Ux of the up optical fiber line 32U of the pair 32 of optical fiber lines, and the output end 32Uy of the up optical fiber line 32U of the pair 32 of optical fiber lines is connected with the optical fiber end (input end) 14e of the pair #1 of optical fiber lines of the trunk cable 14. Then, the optical fiber end (output end) 14f of the pair #1 of optical fiber lines of the trunk cable 14 is connected with the input end 32Dx of the down optical fiber line 32D of the pair 32 of optical fiber lines, and the output end 32Dy of the down optical fiber line 32D of the pair 32 of optical fiber lines is connected with the optical fiber end (input end) 14b of the pair #1 of optical fiber lines of the trunk cable 14.

For the waveband M, its pair 36 of optical fiber lines is not provided with an optical amplifier, and, therefore, the optical amplifier 34a of the pair 34 of optical fiber lines of the waveband L is utilized. For this purpose, the optical switches 34c and 34d of the pair 34 of optical fiber lines are connected to the optical bypass fiber line 34e, thereby to disconnect the add/dropping element 34b of the waveband L. Then, the optical fiber end (output end) 14c of the pair #2 of optical fiber lines of the trunk cable 14 is connected with the input end 34Ux of the up optical fiber line 34U of the pair 34 of optical fiber lines, the output end 34Uy of the up optical fiber line 34U of the pair 34 of optical fiber lines is connected with the input end 30Dx of the down optical fiber line 30D of the pair 30 of optical fiber lines, the output end 30Dy of the down optical fiber line 30D of the pair 30 of optical fiber lines is connected with the input end 36Ux of the up optical fiber line 36U of the pair 36 of optical fiber lines, and the output end 36Uy of the up optical fiber line 36U of the pair 36 of optical fiber lines is connected with the optical fiber end (input end) 14g of the pair #2 of optical fiber lines of the trunk cable 14.

Then, the optical fiber end (output end) 14h of the pair #2 of optical fiber lines of the trunk cable 14 is connected to the input end 34Dx of the down optical fiber line 34D of the pair 34 of optical fiber lines, the output end 34Uy of the down optical fiber line 34D of the pair 34 of optical fiber lines is connected with the input end 30Ux of the up optical fiber line 30U of the pair 30 of optical fiber lines, the output end 30Uy of the up optical fiber line 30U of the pair 30 of optical fiber lines is connected with the input end 36Dx of the down optical fiber line 36D of the pair 36 of optical fiber lines, and the output end 36Dy of the down optical fiber line 36D of the pair 36 of optical fiber lines is connected with the optical fiber end (input end) 14d of the pair #2 of optical fiber lines of the trunk cable 14.

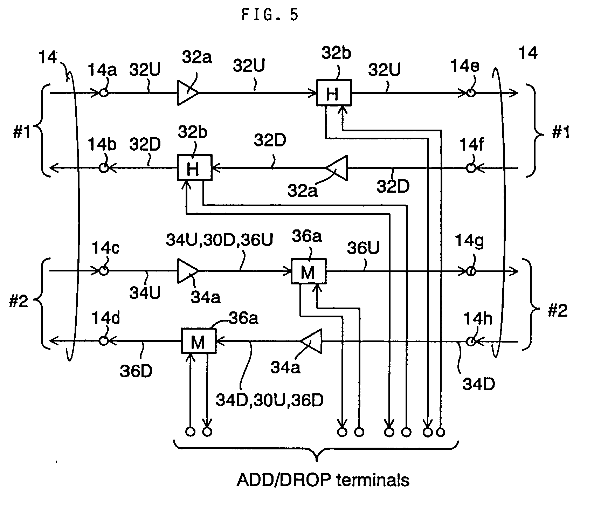

FIG. 5 illustrates an equivalent circuitry arrangement of the connection of FIG. 4. As it is understood from FIG. 5, this circuitry arrangement is adapted to effect add/drop of the waveband H on the up and down lines of the pair #1 of optical fiber lines of the trunk cable 14, and add/drop of the waveband M on the up and down lines of the pair #2 of optical fiber lines of the trunk cable 14. One optical amplifier is inserted in each of the up and down lines.

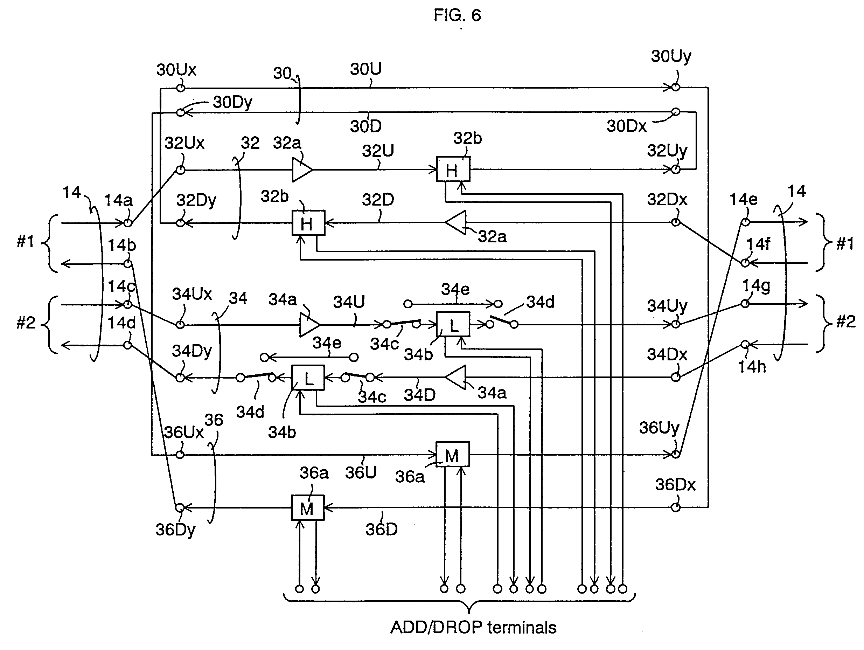

Next, an example of connection to effect add/drop of the wavebands M, H on the pair #1 of optical fiber lines, and add/drop of the waveband L on the pair #2 of optical fiber lines will be described. FIG. 6 illustrates this example of connection.

To effect add/drop of both the wavebands M and H on the pair #1 of optical fiber lines, the pairs 32 and 36 of optical fiber lines are connected in series. However, since it is necessary to arrange optical amplifiers in advance, the connections are made as follows. Namely, the optical fiber end (output end) 14a of the pair #1 of optical fiber lines of the trunk cable 14 is connected with the input end 32Ux of the up optical fiber line 32U of the pair 32 of optical fiber lines, the output end 32Uy of the up optical fiber line 32U of the pair 32 of optical fiber lines is connected with the input end 30Dx of the down optical fiber line 30D of the pair 30 of optical fiber lines, the output end 30Dy of the down optical fiber line 30D of the pair 30 of optical fiber lines is connected with the input end 36Ux of the up optical fiber line 36U of the pair 36 of optical fiber lines, and the output end 36Uy of the up optical fiber line 36U of the pair 36 of optical fiber lines is connected with the optical fiber end (input end) 14e of the pair #1 of optical fiber lines of the trunk cable 14.

The optical fiber end (output end) 14f of the pair #1 of optical fiber lines of the trunk cable 14 is connected with the input end 32Dx of the down optical fiber line 32D of the pair 32 of optical fiber lines; output end 32Dy of the down optical fiber line 32D of the pair 32 of optical fiber lines is connected with the input end 30Ux of the up optical fiber line 30U of the pair 30 of optical fiber lines; the output end 30Uy of the up optical fiber line 30U of the pair 30 of optical fiber lines is connected with the input end 36Dx of the down optical fiber line 36D of the pair 36 of optical fiber lines; and the output end 36Dy of the down optical fiber line 36D of the pair 36 of optical fiber lines is connected with the optical fiber end (input end) 14b of the pair #1 of optical fiber lines of the trunk cable 14.

About the add/drop of the waveband L on the pair #2 of optical fiber lines, the pair 34 of optical lines is connected with the pair #2 of optical fiber lines, since the pair 34 of optical fiber lines is provided with the necessary elements (optical amplifiers 34a and add/dropping elements 34b for add/dropping the waveband L). Of course, the optical switches 34c and 34d should be connected with the add/dropping elements 34b. Specifically, the optical fiber end (output end) 14c of the pair #2 of optical fiber lines of the trunk cable 14 is connected with the input end 34Ux of the up optical fiber line 34U of the pair 34 of optical fiber lines, and the output end 34Uy of the up optical fiber line 34U of the pair 34 of optical fiber lines is connected with the optical fiber end (input end) 14g of the pair #2 of optical fiber lines of the trunk cable 14. The optical fiber end (output end) 14h of the pair #2 of optical fiber lines of the trunk cable 14 is connected with the input end 34Dx of the down optical fiber line 34D of the pair 34 of optical fiber lines, and the output end 34Dy of the down optical fiber line 34D of the pair 34 of optical fiber lines is connected to the optical fiber end (input end) 14d of the pair #2 of optical fiber lines of the trunk cable 14.

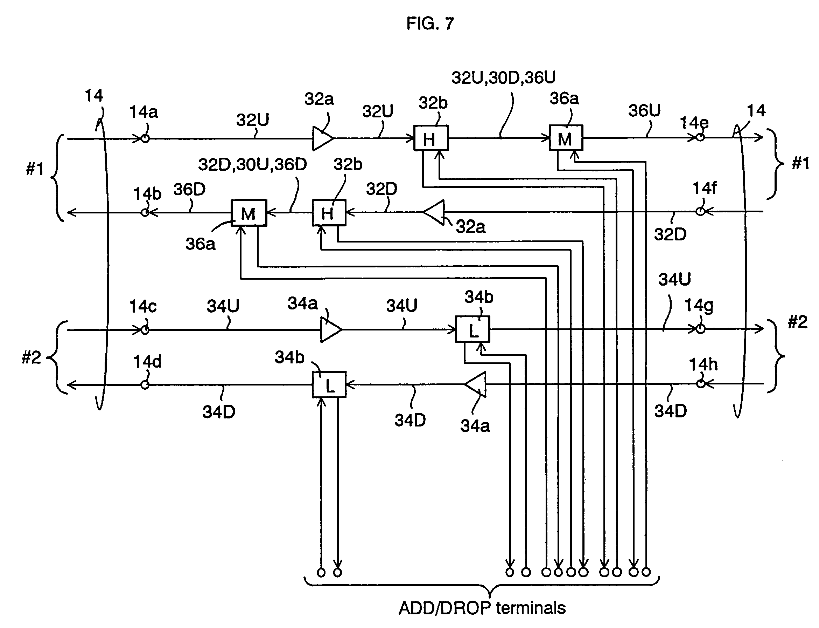

FIG. 7 illustrates an equivalent circuitry arrangement of the connection of FIG. 6. As it is understood from FIG. 7, this circuitry arrangement is adapted to effect add/drop of the waveband H and waveband M on the up and down lines of the pair #1 of optical fiber lines of the trunk cable 14, and to effect add/drop of the waveband L on the up and down lines of the pair #2 of optical fiber lines. One optical amplifier is inserted in both up and down lines of these pairs of optical fiber lines.

When one or more of the pairs 32∼36 of optical fiber lines have remained, logically it is not necessary to make connections via the pair 30 of optical fiber lines. However, for laying these cables deep in the sea floor, each pair 30 ∼ 36 of optical fiber lines is in a completely watertight structure. In this case, use of the through optical fiber lines is useful, and it makes it easy to deal with a case where any of the wavelengths are not subjected to add/drop on either pair #1 or #2 of optical fiber lines.

The optical branching apparatus illustrated in FIG. 3 can be utilized for general purpose, so long as it is not used to effect add/drop of the same waveband on both pairs #1 and #2 of optical fiber lines. Namely, it is sufficient to have the optical branching apparatus of FIG. 3 in stock, thereby the problem of the conventional art which requires to have many add/dropping elements for different wavelengths in stock is completely solved. Further, even after the cables have been laid, the wavelength allotted to branch stations may be changed within a range of wavebands that can be subjected to add/drop by any of the optical branching apparatuses 18-1 ∼ 18-6 to be connected. Moreover, when the art of narrowing spaces between adjacent wavelengths is put into practical use, it would be sufficient to only increase a precision of separating wavelengths at each trunk station and branch station, while the optical branching apparatuses are left as they are, so that there will be an advantage of easily dealing with a high density wavelength-division multiplexing system. This is very useful for submarine optical cable systems, since most of the optical branching apparatuses are laid deep in the sea floor.

With the optical branching apparatus shown in FIG. 3, each add/dropping element 32b, 34b, and 36a is effectively usable by the arrangement of add/dropping the different wavebands on the pairs #1 and #2 of optical fiber lines. In this connection, referring to FIG. 2, for example, the optical branching apparatuses 182 and 18-3; and optical branching apparatuses 18-5 and 18-6 may respectively be made into one integral body.

With the optical branching apparatus shown in FIG. 3, add/dropping elements of same waveband are connected to up and down lines of the pair of optical fiber lines. However, it is apparent that add/drop elements of different wavebands may be selected for up and down lines of the same pair of optical fiber lines.

The TABLE of FIG. 1 is an example of division of wavebands. For wavelength-division multiplexing transmission system using the same number of eight wavelengths, the following division of wavebands may be selected.

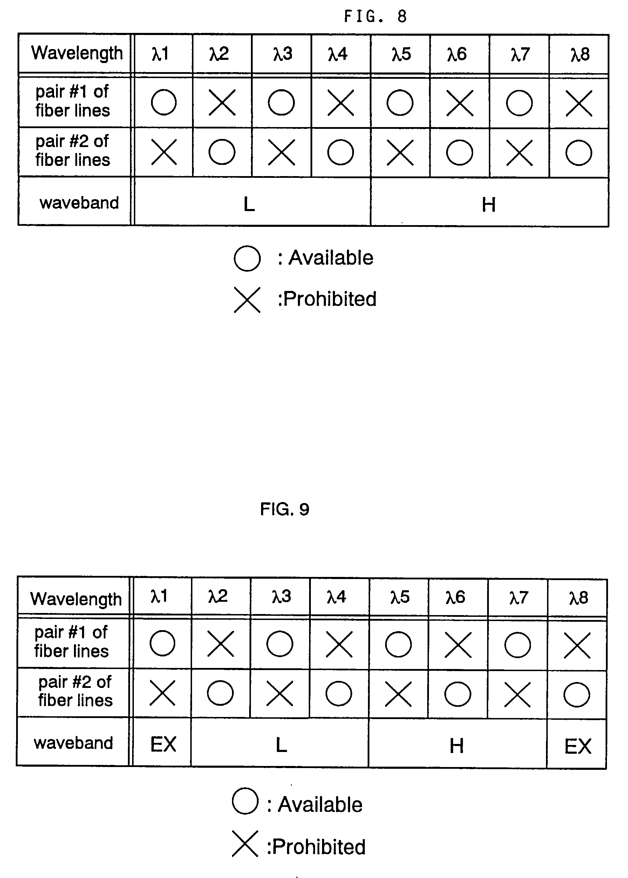

FIG. 8 shows another example of division of wavebands. In FIG. 8, the eight wavelengths λ1∼λ8 are divided into two wavebands of high and low, namely, wavebands H and L, of which the wavelengths λ1, λ3, λ5 and λ7 are allotted to the pair #1 of optical fiber lines, and the remaining wavelengths λ2, λ4, λ6 and λ8 are allotted to the pair #2 of optical fiber lines. With this division of wavelengths, depending on which of the waveband L or H is subject to add/drop on the pairs #1 and #2 of optical fiber lines, each branch station connected to the optical branching apparatus of either waveband H or L can utilize wavelengths in the following combinations.

Connection of the pair #1 of optical fiber lines with the optical branching apparatus of the waveband L allows access with wavelengths λ1 and λ3; connection with the optical branching apparatus of the waveband H allows access with wavelengths λ5 and λ7; and connection with the optical branching apparatus of wavebands L and H allows access with wavelengths λ1, λ3, λ5 and λ7. Similarly, connection of the pair #2 of optical fiber lines with the optical branching apparatus of the waveband L allows access with wavelengths λ2 and λ4, connection with the optical branching apparatus of the waveband H allows access with wavelengths λ6 and λ8; and connection with the optical branching apparatus of wavebands L, H allows access with wavelengths λ2, λ4, λ6 and λ8. Of course, the add/drop waveband of the optical branching apparatus to be connected to the pair #1 of optical fiber lines and the add/drop waveband of the optical branching apparatus to be connected to the pair #2 of optical fiber lines can be set independently of each other. However, in the case where one each optical fiber line for each waveband (including through or waveband EX) as shown in the TABLE of FIG. 3 is provided, and the optical branching apparatus, which effects add/drop of a desired waveband or wavebands by combining these discrete optical fiber lines on the pairs #1 and #2 of optical fiber lines, is used, the same waveband cannot be utilized for both pairs #1 and #2 of optical fiber lines.

Now referring to FIG. 8, two wavelengths (for example, λ2 and λ4) can be used, by one branch station, and, therefore, even after the cabals have been laid, an increase of traffic can be immediately dealt with by simply making additional works in the respective branch stations.

In FIG. 8, particular prohibited wavelength or wavelengths (for example, wavelengths λ2, λ4, λ6 and λ8 prohibited to use for the pair #1 of optical fiber lines) can be utilized for communication between branch stations, if there are no problems in setting a gain of repeater and a transmission margin.

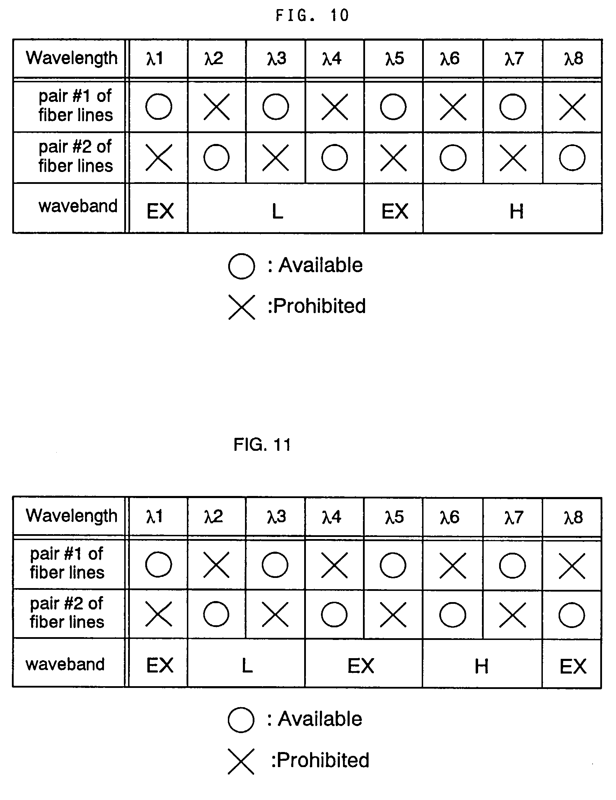

FIG. 9 and FIG. 10 respectively show examples of division of eight wavelengths, of which two wavelengths are for communication between the trunk stations, and the remaining six wavelengths are divided into two wavebands of L, H. Here, too, in order to avoid a confusion caused by making accessible to both pairs #1 and #2 of optical fiber lines with the same wavelength, the respective wavelengths λ1 ∼ λ8 are allotted to be solely used for either the pair #1 or the pair #2 of optical fiber lines. Namely, the wavelengths λ1, λ3, λ5 and λ7 are allotted to the pair #1 of optical fiber lines, and the remaining wavelengths λ2, λ4, λ6 and λ8 are allotted to the pair #2 of optical fiber lines.

In FIG. 9, the wavelength λ1 is allotted for communication between the trunk stations on the pair #1 of optical fiber lines, and the wavelength λ8 is allotted for communication between the trunk stations on the pair #2 of optical fiber lines. The wavelengths λ2, λ3, and λ4 constitute the waveband L, and the wavelengths λ5, λ6 and λ7 constitute the waveband H. In FIG. 10, the wavelengths λ1 and λ5 are allotted for communication between the trunk stations on the pair #1 of optical fiber lines, the wavelengths λ2, λ3 and λ4 constitute the waveband L, and the wavelengths λ6, λ7 and λ8 constitute the waveband H. FIG. 10 is different from FIG. 9 in that, in FIG. 10, the pair #2 of optical fiber lines is not used for communication between the trunk stations.

With the division of wavebands of FIG. 9 and FIG. 10, a trouble occurred in any branch cables does not affect the communication between the trunk stations at all. Further, with respect to the traffic in the wavebands L and H, if a trouble has occurred in a certain branch cable, the resulted affect of such troubled branch cable can be lessened, and the trouble can be easily dealt with, because the same optical signal reaches an entry port of a branch station which makes branching of the same waveband as that of the troubled branch cable, and such not-troubled branch station is made to receive the signal in place of the branch station connected with the troubled branch cable, by making required works in the not-troubled branch station.

FIG. 11 shows an example of division of wavebands for an increased capacity for communication between the trunk stations. The example is similar to the above described examples in that the wavelengths λ1∼λ8 are alternately allotted to access either the pair #1 or #2 of optical fiber lines in order to allow easy separation of wavelengths at the receiving station, and to avoid confusion caused by making accessible to the pairs #1 and #2 of optical fiber lines with the same wavelength. Namely, the wavelengths λ1, λ3, λ5 and λ7 are allotted to the pair #1 of optical fiber lines, and the remaining wavelengths λ2, λ4, λ6 and λ8 are allotted to the pair #2 of optical fiber lines. And, the wavelengths λ1 and λ5 are used for communication between the trunk stations on the pair #1 of optical fiber lines; and the wavelengths λ4 and λ8 are used for communication between the trunk stations on the pair #2 of optical fiber lines. The wavelengths λ2 and λ3 constitute the waveband L; and the wavelengths λ6 and λ7 constitute the waveband H.

The example of waveband division of FIG. 11 is suitable for the case where a larger capacity is required for communication between the trunk stations, and a trouble occurred in a branch cable does not make any affect to the communication between the trunk stations.

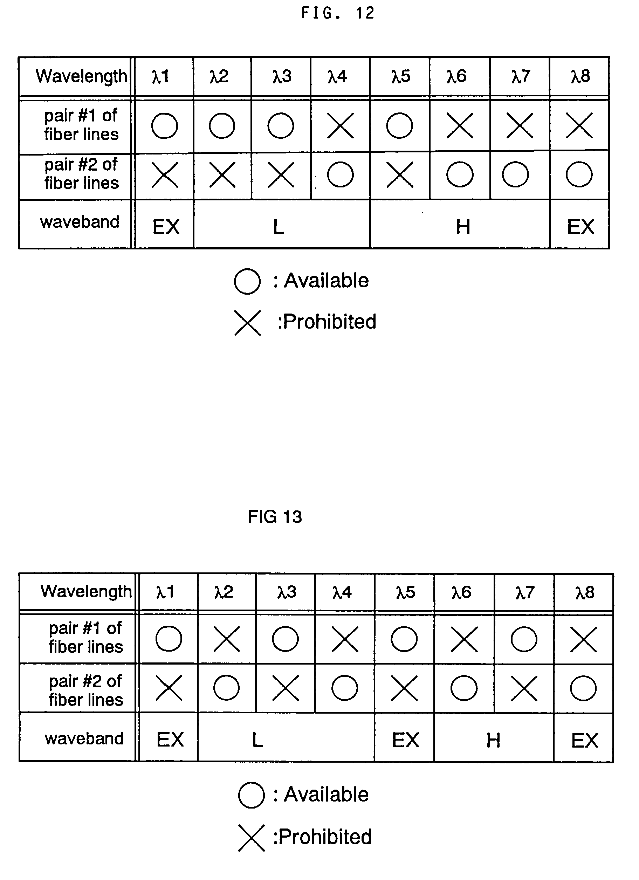

FIG. 12 shows an example of division of wavebands for allotting three adjacent wavelengths to the same pair #1 or #2 of optical fiber lines. Here, the wavelengths λ1, λ2, λ3 and λ5 are allotted to the pair #1 of optical fiber lines; and the remaining wavelengths λ4, λ6, λ7 and λ8 are allotted to the pair #2 of optical fiber lines. The wavelength λ1 is for communication between the trunk stations on the pair #1 of optical fiber lines, and the wavelength λ8 is used for communication between the trunk stations on the pair #2 of optical fiber lines. The wavelengths λ2, λ3 and λ4 constitute the waveband L; and the wavelengths λ5, λ6 and λ7 constitute the waveband H.

FIG. 13 and FIG. 14 respectively show examples of division of wavebands wherein the waveband L consists of three wavelengths, and the waveband H consists of two wavelengths. In FIG. 13, the wavelengths λ1 ∼ λ8 are alternately allotted to either the pair #1 or #2 of optical fiber lines. The wavelengths λ1 and λ5 are used for communication between the trunk stations on the pair #1 of optical fiber lines; and the wavelength λ8 is used for communication between the trunk stations on the pair #2 of optical fiber lines. The wavelengths λ2, λ3 and λ4 constitute the waveband L; and the wavelengths λ6 and λ7 constitute the waveband H.

In FIG. 14, the wavelength λ4 is used for communication between the trunk stations on the pair #1 of optical fibers; and the wavelengths λ4 and λ7 are used for communication between the trunk stations on the pair #2 of optical fiber lines. The wavelengths λ1, λ2 and λ3 constitute the waveband L; and the wavelengths λ5 and λ6 constitute the waveband H. In this case, the wavelength λ4 may be used for communications between the trunk stations commonly on the pairs #1 and #2 of optical fiber lines, without causing any problems, since the pairs #1 and #2 of optical fiber lines do not spatially overlap one upon the other.

The above description has been made for the use of two pairs of optical fiber lines as an example. But, basically the present invention can be applied for one pair of optical fiber lines or more than three pairs of optical fiber lines. Also, the above description has been made for a wavelength-division multiplexing transmission system comprising eight wavelengths, but, needless to say, the number of wavelengths for use may be more or less than eight wavelengths.

Further, the above description has been made mainly for the arrangement having the trunk stations disposed at both ends of the trunk cables, but it is readily understood that the present invention can also be applied for an arrangement having annular trunk cables.

Those skilled in the art will be understood from the foregoing description that the present invention can provide an optical transmission system capable of flexibly dealing with fluctuation of traffic with easy maintenance. Also, the invention provides an optical transmission system which can withstand troubles occurred in any of branch cables.

## Claims

1. An optical transmission system of wavelength-division multiplex transmission comprising a trunk cable having one or more pairs of optical fiber lines, and one or more branch stations each connected to the trunk cable through optical branching means and branch cable means, respectively, the optical transmission system is characterized in that;
wavelengths to be wavelength-division multiplexed are divided into a plurality of wavebands, and said optical branching means comprise add/dropping means for effecting add/drop of one or more desired wavebands on said trunk cable.

2. An optical transmission system as recited in Claim 1, wherein said plurality of wavebands respectively contain therein one or more wavebands which cannot be subjected to add/drop by said optical branching means.

3. An optical transmission system as recited in Claim 1 or 2, wherein said optical branching means comprise first add/dropping means for effecting add/drop of one or more wavebands on a first pair of optical fiber lines of said trunk cable, and second add/dropping means for effecting add/drop of one or more wavebands, which are different from those of the first add/drop means, on a second pair of optical fiber lines of said trunk cable.

4. An optical transmission system as recited in claim 3, wherein each said wavelength to be wavelength-division multiplexed is exclusively allotted to said first pair of optical fiber lines and said second pair of optical fiber lines.

5. An optical transmission system as recited in claim 4, wherein each said wavelength to be wavelength-division multiplexed is alternately allotted to said first pair of optical fiber lines and said second pair of optical fiber lines.

6. An optical transmission system as recited in one of the Claims 1 to 5 further comprising a first and a second trunk stations to be connected to both ends of said trunk cable.

7. An optical transmission system as recited in one of the Claims 1 to 6, wherein said optical branching apparatus comprise
a plurality of add/drop optical transmission means having add/dropping means for effecting add/drop of a waveband which is subjected to add/drop respectively, when wavelengths to be wavelength-division multiplexed are divided into a plurality of wavebands, and
through optical transmission means.

8. An optical branching apparatus as recited in Claim 8, wherein said plurality of add/drop optical transmission means are, except at least one add/drop optical transmission means, provided with optical amplifier means.

9. An optical branching apparatus as recited in Claim 7, wherein at least one of said add/drop optical transmission means with said optical amplifier means includes bypass means for selectively bypassing said add/dropping means.

10. An optical branching apparatus as recited in one of the Claims 7 to 9, wherein said add/drop optical transmission means and said through optical transmission means are respectively provided for each unit comprising a pair of optical fiber lines which consists of up and down optical fiber lines.
